# EUROPEAN PATENT SPECIFICATION

(11) **EP 4 554 431 B1**
(45) Date of publication and mention of the grant of the patent: **08.04.2026**
(21) Application number: 23738543.0
(22) Date of filing: 05.07.2023
(51) Int. Cl.: A46B 9/04, A46B 5/00, A61C 17/22, A46B 13/02, A61C 17/34

(54) **ORAL CARE DEVICE**
MUNDPFLEGEVORRICHTUNG
DISPOSITIF DE SOINS BUCCAUX

(30) Priority: 12.07.2022 US 202263388388 P; 16.08.2022 EP 22190539
(43) Date of publication of application: 21.05.2025
(73) Proprietor: Koninklijke Philips N.V., 5656 AG Eindhoven (NL)
(72) Inventor: GOTTENBOS, Bart, 5656 AG Eindhoven (NL); HALL, Scott E., 5656 AG Eindhoven (NL)
(74) Representative: Philips Intellectual Property & Standards
(86) International application number: PCT/EP2023/068470
(87) International publication number: WO 2024/012946

(56) References cited:
- WO-A1-2007/121760
- US-A1- 2021 315 676

## Description

### FIELD OF THE INVENTION

This invention relates to the field of oral care devices and in particular to the field of oral care devices comprising a brushing mouthpiece portion.

### BACKGROUND OF THE INVENTION

Brushing mouthpieces are anticipated to disrupt the power toothbrush market in the future. They have the potential to brush faster, with greater consistency and more completely than a toothbrush. There remain challenges in the development of such devices, for example in providing a device which remains comfortable and practical to use, and also sufficiency structurally efficient to be affordable to an end-user.

Developments in the field are generally sought.

Various elements of a dental cleaning mouthpiece are designed to move during operation, particularly the cleaning elements relative to the teeth. In practice, elements will move during operation relative to the most rigid point in the device-mouth system. For instance, if an element is designed for the purpose of moving up-and-down in the mouth, along an axis extending from the lower to upper jaw, but is anchored to the lower jaw, it will not be able to move down, and all motion will consequently be made in only the upwards direction.

In an ideal scenario, a user firmly holds the device handle steady while avoiding biting down on the mouthpiece portion. In this case, the mouthpiece is "floating" between the upper and lower jaws. In this case, the up-and-down motion of the cleaning elements is made with respect to the device body, and in both directions (up and down). In principle, this scenario would allow proper brushing motions to be made with respect to the jaw. However, it is hard in practice for a user to keep the device steady enough and to not let it rest against one of the jaws.

More commonly, it has been found that a user typically allows the mouthpiece to rest against the lower or upper jaw, in particular allowing the lower or upper row of teeth to rest against the base of the lower or upper channel of the mouthpiece. In this event, the drive motion is impeded and so only one of the rows of teeth are exposed to movement of the cleaning elements.

US 2021/315676 A1 discloses a dental care device which is customized for a particular user, including: a support plate having: a first portion configured to be inserted into a mouth; and an attachment mechanism configured to attach the dental care device to a drive assembly; and an elastomer (elastic polymer) portion enclosing the first portion of the plate, the elastomer portion including a plurality of cleaning tips and shaped in accordance with dental details of the particular user.

### SUMMARY OF THE INVENTION

It has been recognized by the inventors that although user handling can influence the anchoring point of a brushing device, design choices can be made to guide anchoring in a manner that does not strain the arm of a user and at the same time achieves the correct relative motion.

In particular, the inventors have recognized that provision of dedicated anchoring member that the user can hold firmly against a part of their mouth during use of the mouthpiece device can provide a rigid anchoring for the device, whereby the motion of the cleaning elements can be left unimpeded, and the user is not strained since their arm is rested during use.

For instance, one design the inventors have devised is a bite block arranged for the user to the bite with their teeth, and wherein the main body of the mouthpiece carrying the moving cleaning elements can move relative to the bite block. The bite block anchors the positioning of the mouthpiece in a comfortable way, leaving the cleaning elements free to move. The brushing motion is transferred much more efficiently as the motor is rigidly grounded between the teeth, and for the user this action is easy and natural as the jaw can deliver high forces, much higher than the hands can.

In developing this design, the inventors have identified new challenges to optimizing performance. One is as follows.

In typical non-custom mouthpieces, the mouthpiece portion will be undersized relative to a typical mouth, as oversizing is highly uncomfortable for the back of the mouth.

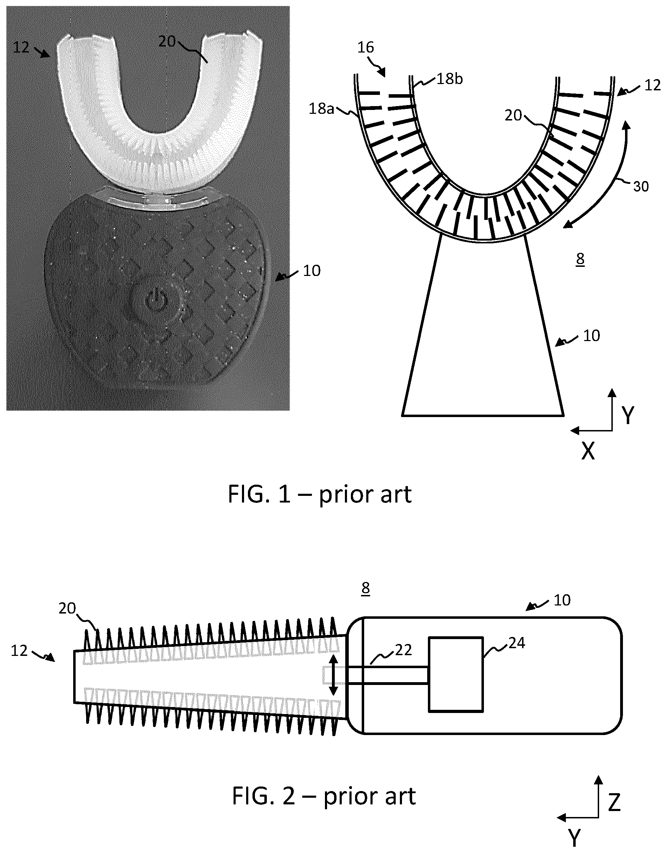

An example non-custom mouthpiece known in art is shown in Fig. 1, in photographic representation (left) and schematic line representation (right) This does not include the new anchoring member devised by the inventors, and is undersized. The device comprises a handle portion 10 and a mouthpiece portion 12. The mouthpiece portion carries an arrangement of cleaning elements 20, e.g. elastomeric bristles. The mouthpiece portion describes an arcuate contour 30 for following the contour of the user's teeth, and the mouthpiece portion delimits a tooth receiving channel 16 within which teeth sit and are brushed by the cleaning elements during use. There may be upper and lower channels for both rows of teeth.

The way of operating the device is that the user, due to the under-sizing, must move the mouthpiece sideways in either direction in order to reach the back molars.

It has been recognized by the inventors that, when using the new anchoring member design, this need for side-ways / lateral movement leads to the undesirable situation that the anchoring member (e.g. bite block) needs to be released by the user. On release, the grounding function is lost, reducing the cleaning efficacy when moving. Additionally, for the user it is unclear when to anchor for grounding and when to move, making the technique of using such a brushing mouthpiece complicated. This is highly undesirable, since a main advantage of a brushing mouthpiece over toothbrushes is the promise of a superior ease of use.

The inventors, having identified this problem, have devised a solution, which is described herein.

The invention is defined by the claims.

According to examples in accordance with an aspect of the invention, there is provided an oral care device. The oral care device comprises a mouthpiece portion for at least partial receipt in the mouth of a user. A body of the mouthpiece portion describes an arcuate contour, for approximately following at least a part of a contour of a user's dental arch. The mouthpiece portion carries a set of oral cleaning elements for mechanical engagement with teeth during operation. These may extend/upstand from a surface of the mouthpiece portion body for example.

The device further includes a second portion, coupled to the mouthpiece portion. For example, the second portion could be a handle portion, but need not be in all cases.

The device further includes an actuation mechanism for actuating motion of the cleaning elements relative to said second portion, and relative to teeth when the mouthpiece portion is received in the mouth. The actuation mechanism may be configured to generate cyclic motion in preferred embodiments.

The device further comprises an anchoring member engageable by a part of the user's mouth when the mouthpiece portion is received in the mouth for normal use, for holding the anchoring member fixed in position with respect to the jaws. For example, this could be a bite block for biting by the user, but need not be in all cases.

The anchoring member is mechanically coupled to said second portion via an anchoring member coupling.

The anchoring member coupling is such as to permit relative motion between the anchoring member and the mouthpiece portion in at least a first direction, the first direction being transverse to a direction of motion of the cleaning elements.

Thus, the mouthpiece of this invention proposes to connect the anchoring member with the second portion of the mouthpiece (e.g. the handle or the motor inside the handle) using a connection, which is rigid in the brushing motion direction, but movable in the direction of positioning adjustment needed to reach the full dentition, e.g. sideways motion inside the mouth.

The mouthpiece portion may connect independently to the second portion 10 via its own coupling.

It is noted that the aforementioned at least first direction along which the anchoring member coupling permits movement of the anchoring member relative to the mouthpiece portion may define a curved path. Thus, the direction could be a direction defined by a non-linear path in some examples. Thus, more generally, it might be said that the anchoring member coupling is such as to permit relative motion between the anchoring member and the mouthpiece portion along at least a first direction or a first motion path, where this direction or motion path is generally transverse to the direction of motion of the cleaning elements.

The anchoring member may be such that, when held by said part of the user's mouth in normal operation, the cleaning elements are moveable relative to the anchoring member, and the actuation mechanism may be operable to cause the cleaning elements to move relative to both the upper and lower jaws simultaneously.

The anchoring member coupling is preferably further such as to at least partially prevent (e.g. inhibit or resist or counter) relative motion between the anchoring member and the mouthpiece portion in a second direction, the second direction being substantially parallel with said direction of motion.

By preferably further preventing relative motion between the anchoring member and the mouthpiece portion in the second direction (this being the direction of motion of the cleaning elements), this avoids negating or absorbing the cleaning element motion through the motion of the anchoring member. If the anchoring member can move in the same direction as the driving force on the cleaning elements, it might result that the anchoring member simply moves to absorb the motion, and the cleaning elements remain effectively static relative to the moving anchoring member. The anchoring member only needs to be able to move transverse the direction of motion, not with the direction of motion.

In some embodiments, the aforementioned second portion is for remaining outside of the mouth during use, when the mouthpiece portion is received inside the mouth. As noted already, it may be a handle portion which the user holds during use. However, in a hands-free device, it could simply be a second body portion which for example houses the drive unit for driving motion. The second portion in the context of the invention could also be the drive unit itself, as will be explained through examples later.

In some embodiments, the anchoring member coupling is rigid in said second direction (the direction of cleaning element actuation), and flexible or pivotable in said first direction (transverse the cleaning element actuation direction). This is one way to facilitate the twin effects already introduced above.

In some embodiments, the arcuate contour defined by the body of the mouthpiece portion lay in a plane, and wherein said first direction is parallel with said plane. When the mouthpiece portion is received in the mouth, it is anticipated that this would be the mesial-distal direction, so that the accommodated relative motion permits the advantageous movement of the mouthpiece portion sideways in the mouth without releasing the anchoring member, so that the back molars can be reached.

As already mentioned, in some embodiments, the anchoring member is for biting by the user, e.g. it forms a bite block. However, this is not the only possibility. It could also be designed for the user to lean a part of their mouth or gums against for anchoring, or even for leaning an external part of their mouth or face against. It could be designed in some cases to be held between the lips, rather than being bitten.

In some embodiments, the aforementioned first direction is oriented such that, when the mouthpiece portion is received in the mouth for normal use, it is approximately perpendicular to a vertical axis extending between the upper and lower jaws. In other words, parallel with a plane of the mouthpiece. In other words, and as already suggested, the first direction can be a sideways direction in practice. It may be a mesial-distal-mesial direction in operation.

In some embodiments, the first direction may in part follow the arcuate contour of the mouthpiece portion, so that the accommodated motion of the anchoring member relative to the mouthpiece portion follows an at least partially arcuate path. This permits a partially rotational motion of the mouthpiece body about the anchoring member. As will be explained, this could be achieved through a pivotal or hinged coupling between the anchoring member and the second portion.

As already mentioned, in some embodiments, the second portion may be a handle portion of the oral care device, wherein the handle portion houses a drive unit of the actuation mechanism for generating a driving force of the motion.

In some embodiments, the aforementioned anchoring member coupling may comprise a connecting element extending from the anchoring member to the drive unit, or extending from the anchoring member to a housing of the second portion. This may be formed of one or multiple parts.

In some embodiments, the connecting element of the anchoring member coupling comprises at least a portion formed by a flexible sheet element, a plane of the flexible sheet element being oriented parallel with said second direction (this being the direction of cleaning element motion), and a normal of the plane being oriented parallel with said first direction (the direction substantially transverse the cleaning element motion). A sheet element is a highly structurally efficient way of providing a coupling which permits motion in a single direction only (the direction normal the plane of the sheet), while being stiff against motion in any direction orthogonal to the normal, i.e. any direction parallel with the plane.

In some embodiments, the connecting element of the anchoring member coupling comprises a sheet element having a reduced thickness section part way between the second portion and the anchoring member, the reduced thickness section defining a preferential bending line of the sheet element, the preferential bending line being perpendicular to said first direction. This is another efficient variation on the above-described arrangement.

In some embodiments, the connecting element of the anchoring member coupling comprises an inflexible element, and wherein the connecting element is connected to the anchoring member via a pivotable joint, or is connected to the second portion or drive unit by a pivotable joint, e.g. a hinge joint permitting rotational motion along a single directional axis only. This is another structurally efficient way of achieving the desired twin effects of accommodating relative motion of the anchoring member in the first direction, but substantially not in the second direction.

In some embodiments, the connecting element of the anchoring member coupling extends from an exterior surface of the anchoring member.

However, in other envisaged embodiments, the connecting element of the anchoring member coupling extends from a connection point interior of the anchoring member, and preferably wherein the anchoring member includes a hollow interior cavity for accommodating the connecting element. The connection point interior of the anchoring member may define a pivotable joint for example.

As will become much clearer though reference to drawings later in this document, the connecting element may be arranged to extend through at least one aperture formed in (for instance a wall of) the mouthpiece portion at a position facing the second portion.

For example, the mouthpiece portion may define a tooth-receiving channel. The anchoring member may be situated supported inside the tooth receiving channel. The aforementioned at least one aperture may be formed through a wall which partially bounds the tooth receiving channel. The at least one aperture may be sized and positioned such as to permit passage of the anchoring member coupling connecting element through the aperture, so as to connect to the anchoring member inside the tooth receiving channel.

In some embodiments, a width across the aperture in at least one direction is larger than a width of the connecting element extending through the aperture, such that the aperture delimits a clearance area around the connecting element extending through it, permitting lateral movement of the connecting element within the aperture. This provides structural accommodation for the movement of the anchoring member via pivotal motion of the connecting element.

In some embodiments, the device may additionally comprise a drive coupling which mechanically couples the driving force of the drive unit to the body of the mouthpiece portion which carries the cleaning elements for driving the motion of the cleaning elements, and this too may comprise a connecting element. In this disclosure, the connecting element of the anchor member coupling might be referred to as the first connecting element, and the connecting element of the drive coupling might be referred to as the second connecting element.

In some embodiments, the second connecting element extends co-axially with respect to the first connecting element. This provides a structurally efficient way to accommodate both connecting elements.

In some embodiments, the first connecting element extends co-axially within an interior channel delimited by the second connecting element; or the second connecting element extends co-axially within an interior channel delimited by the first connecting element.

In some embodiments, the first connecting element comprises a pair of arms extending in a direction between the anchoring member and the second portion, the arms being spaced by a spacing, and wherein the second connecting element extends co-directionally with the first through the spacing.

In some embodiments, the drive unit may comprise a motor. In other embodiments, the actuation mechanism may be a pneumatic actuation mechanism in which the drive unit is a fluid pump.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a mouthpiece device known in the art;
Fig. 2 shows a further schematic view of a mouthpiece device known in art;
Figs. 3-5 show views of a mouthpiece device according to a set of embodiments of the invention;
Figs. 6-9 shows views of a mouthpiece device according to a further set of embodiments of the invention;
Figs. 10-11 shows views of a mouthpiece device according to a further set of embodiments of the invention; and
Figs. 12-14 shows views of a mouthpiece device according to a further set of embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mouthpiece device for oral cleaning with a dedicated mechanical structure (termed an anchoring member) for providing a support onto which the user can hold fast their jaw in order to anchor the non-moving part of the mouthpiece to the reference frame of the jaw, such that the moving part of the mouthpiece (which carries cleaning elements) moves in an approximately predictable way relative to the upper and lower rows of teeth. The anchoring member is supported mechanically in such a way that it is moveable relative to the part of the mouthpiece which carries the cleaning elements in a transverse direction (that is, in a direction approximately parallel with the plane of the mouthpiece), so as to permit, in use, the mouthpiece portion to be moved sideways in the mouth to reach all teeth.

The way of operating a normal mouthpiece is that the user moves the mouthpiece sideways to reach the back molars. When using an anchoring member such as a bite block, this need for side-ways movement leads to the undesirable situation that the bite block need to be released. On release, the grounding function is lost, reducing the cleaning efficacy when moving. Thus, embodiments of this invention propose to accommodate relative motion of the anchoring member to allow the mouthpiece portion to reach all teeth without release of the anchoring member by the user.

Fig. 1 shows a structure of a mouthpiece device 8 as known in the art, and its components have already been described earlier in this document, and so shall not be repeated in detail again.

Fig. 2 shows a further (side cross-sectional) view of the mouthpiece device depicted in Fig. 1.

In summary, the device comprises a mouthpiece portion 12 for at least partial receipt in the mouth of a user. A body of the mouthpiece portion describes an arcuate contour 30, for approximately following a contour of a user's dental arch. The mouthpiece portion 12 carries a set of oral cleaning elements 20 for mechanical engagement with teeth during operation. The device further comprises a second portion 10, coupled to the mouthpiece portion. This is forms a handle portion in the illustrated example.

The device comprises an actuation mechanism for actuating motion (preferably cyclic motion, e.g. alternating motion, e.g. periodic motion) of the cleaning elements relative to said second portion, and relative to teeth when the mouthpiece portion is received in the mouth. Using the co-ordinate axes illustrated in Fig. 2 (which will be used consistently in this disclosure), this driven motion is in the z-direction. The actuation mechanism includes a drive unit 24 for generating an actuation driving force, and a drive coupling 22 which mechanically couples the driving force to the mouthpiece portion 12 which carries the cleaning elements 20 to provide their motion.

As illustrated in Fig. 1, the mouthpiece portion may delimit a tooth receiving channel 16 within which teeth sit during operation and are brushed by the cleaning elements. There may be upper and lower channels for both rows of teeth.

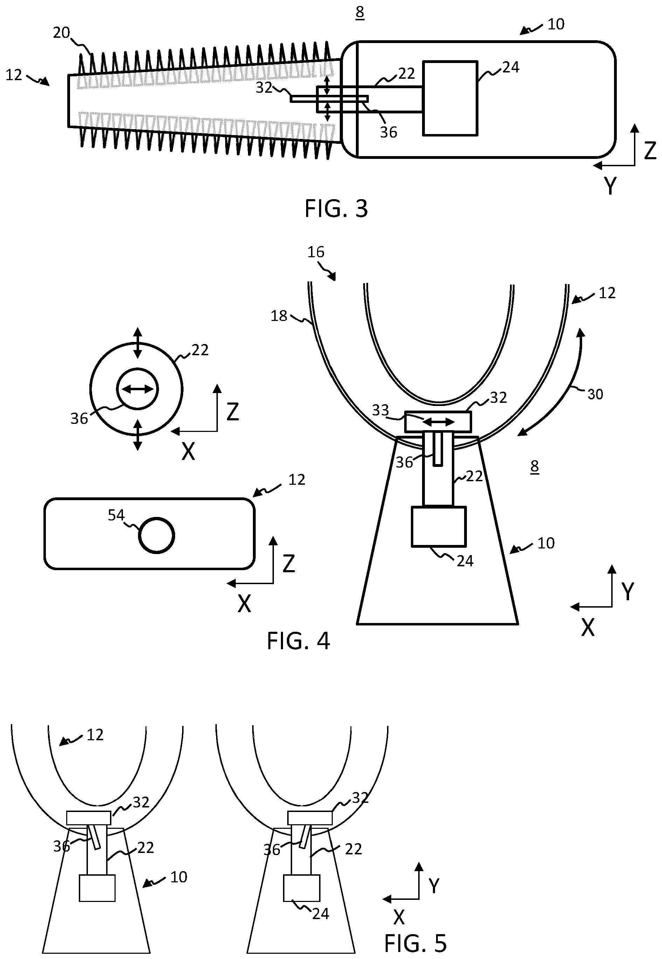

Figs. 3-5 illustrate an example mouthpiece in accordance with at least a first set of embodiments.

To aid understanding in the forthcoming disclosure, the basic features of the device according to all embodiments of the invention will first be outlined in summary form. For convenience, these will be described with illustrative reference to Figs. 3-5, but apply equally for all of the other embodiments that will be described in this disclosure.

An aspect of the invention is an oral care device 8. The device comprises a mouthpiece portion 12 for at least partial receipt in the mouth of a user. A body of the mouthpiece portion describes an arcuate contour 30, for approximately following a contour of a user's dental arch. The mouthpiece portion 12 carries a set of oral cleaning elements 20 for mechanical engagement with teeth during operation. For instance, these comprise protruding elongate elements. For example, these comprise bristles or bristle-like elements. They may be elastomer, e.g. silicone bristle-like elements in some examples.

The device 8 further comprises a second portion 10, coupled to the mouthpiece portion 12. For example, this may form a handle portion. For example, the second portion may be a handle portion and wherein the handle portion houses a drive unit 24 of an actuation mechanism for generating a driving force of the cleaning element motion. The actuation mechanism is for actuating motion of the cleaning elements 20 relative to said second portion 10, and relative to teeth when the mouthpiece portion is received in the mouth. In some embodiments, it may be for actuating cyclic motion, e.g. alternating motion, e.g. periodic motion. The motion may be a vibratory motion in some embodiments. Using the co-ordinate axes illustrated in Fig. 2, the driven motion is in the z-direction. The drive unit 24 is for generating an actuation driving force. A drive coupling 22 mechanically couples the driving force to the mouthpiece portion 12 which carries the cleaning elements 20 to provide their motion.

The device further comprises an anchoring member 32 engageable by a part of the user's mouth when the mouthpiece portion 12 is received in the mouth for normal use, for holding the anchoring member fixed in position with respect to the jaws.

The anchoring member 32 is mechanically coupled to said second portion 10 of the device via an anchoring member coupling 36.

The anchoring member coupling 36 is such as to permit relative motion between the anchoring member 32 and the mouthpiece portion 12 in at least a first direction, the first direction being transverse to a direction of actuated motion of the cleaning elements 20. In the illustrated example, the first direction is a direction illustrated by arrow 33. Using the co-ordinate axes shown in Fig. 4, this is a direction within the x-y plane, for example along the x-direction, or for example along an arcuate path within the x-y plane. This is also a plane within which contains the arcuate contour 30 defined by the body of the mouthpiece portion. The said first direction 33 in this example is oriented such that, when the mouthpiece portion 12 is received in the mouth for normal use, it is approximately perpendicular to a vertical axis (Z) extending between the upper and lower jaws. As noted, said first direction 33 could in general be a direction along any path, either straight or curved, which is generally transverse the direction of actuated motion of the cleaning elements. For example, if the anchoring member coupling is defined by a pivot or hinge (examples to be described below), then the movement will in general be along a curved path in the plane transverse to the cleaning element motion line. Indeed, permitted movement along first direction defining a curved line might be preferable in some cases since the mouthpiece and dentition also roughly define curved shape/contour. A curved path is not however essential to the invention.

Features of an example implementation of the device according to the particular set of embodiments illustrated in Figs. 3-5 will now be described by way of illustration of the above-summarized concept of the invention. It will be appreciated that not all features of this particular set of embodiments are essential to the inventive concept, and are described to aid understanding and to provide an example to illustrate the inventive concepts.

In the illustrated example, the anchoring member 32 is for biting by the user. It forms a bite block.

In the illustrated example, the bite block is situated within the tooth receiving channel 16 of the mouthpiece portion 12, so that it is accessible to teeth of the user.

Preferably, the anchoring member coupling 36 is also configured such as to at least partially prevent relative motion between the anchoring member 32 and the mouthpiece portion 12 in a second direction, the second direction being substantially parallel with said direction of actuated motion of the cleaning elements 20. In this illustrated example, this (second) direction is a direction within the z-y plane (using the co-ordinate axes in Figs. 3-6), for example substantially in the Z-direction, or, in other words, in a direction along a vertical axis (Z) extending between the upper and lower jaws when the mouthpiece portion 12 is received in the mouth for normal use.

Although not fully clear from the drawings of Figs. 3-5, the anchoring member coupling 36 and drive coupling 22 are not connected to one another. In the illustrated example, to accommodate both couplings, the drive coupling 22 extends around the outside of the anchoring member coupling 36. The drive coupling 22 attaches at its distal ends to the mouthpiece portion 12 body. The anchoring member coupling 36 attaches at its distal end to the anchoring member 32. As illustrated in Fig. 5, the anchoring member coupling may extend from a point within or on the second portion 10 or a housing thereof, and be pivotally coupled thereto, such that the anchoring member is moveable along said first direction (X direction in this example). Since the anchoring member 32 is not attached to the mouthpiece portion 12, it can move relative to the mouthpiece portion. Since the drive coupling 22 delimits a clearance around the anchoring member coupling 36 extending through it, as shown schematically in Fig 5, the anchoring member can move by pivoting of the anchoring member coupling within this clearance space.

The anchoring member coupling 36 may be rigid in said second direction (Z), and flexible or pivotable in said first direction (X).

In the illustrated example, the anchoring member coupling 36 and the drive coupling 22 are provided in co-axial relationship. This is illustrated schematically in Fig. 4 (top left) which shows the anchoring member coupling connecting element 36 extending through the drive coupling connecting element 22. The drive coupling connecting element 22 might be tubular, or otherwise annular in cross-section for example. As illustrated, while the anchoring member coupling 36 can move in a first direction (X in this example), the drive coupling 22 is arranged to move in a transverse direction (Z in this example).

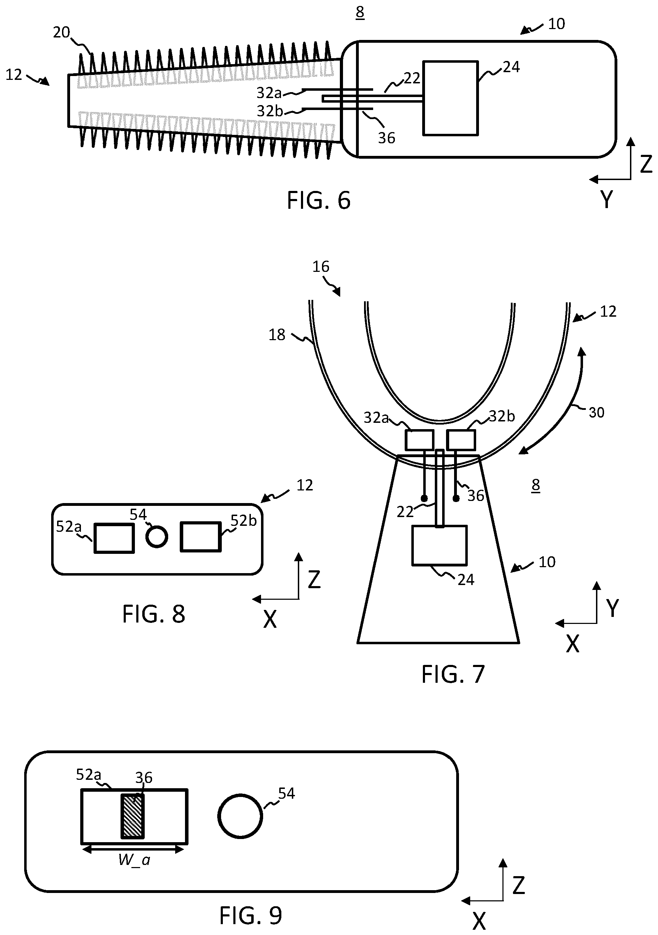

It is equally possible to have the co-axial arrangement inverted, so that the drive coupling connecting element 22 extends co-axially within an interior bore or channel of a (e.g. tubular) anchoring member connecting element 36. Indeed, an example of this alternative arrangement is shown in Figs. 6-9, to be described later.

As can be seen from Figs. 3-5, the anchoring member coupling 36 comprises a connecting element extending from the anchoring member 32 to a point within or on the second portion 10, i.e. the handle portion in this case.

The connecting element of the anchoring member coupling 36 may be arranged to extend through at least one aperture 54 formed in a wall of the mouthpiece portion 12 at a position facing the second portion. This is illustrated schematically in Fig. 4 (bottom left) which shows the aperture 54 in the bottom of the mouthpiece portion, without the couplings extending through it.

For example, the aperture 54 is formed through an area of a wall 18 which partially bounds the tooth receiving channel 16.

The at least one aperture 54 is sized and positioned such as to permit passage of the connecting element of the anchoring member coupling 36 through the aperture, so as to connect to the anchoring member 32 inside the tooth receiving channel 16.

A further example implementation of the device according to a particular set of embodiments will now be described with reference to Figs. 6-9 by way of illustration of the previously summarized concept of the invention. It will be appreciated that not all features of this particular set of embodiments are essential to the inventive concept, and are described to aid understanding and to provide an example to illustrate the inventive concepts. This set of embodiments may in all respects be the same as that of Figs. 3-5, except in respect of the particular configuration of the couplings 22, 36, or connection elements thereof, which connect the drive unit 24 to the mouthpiece portion 12 and the second portion 10 to the anchoring member 32.

In the example illustrated by Fig. 6-9, the anchoring member is formed of two anchoring member portions 32a, 32b. The anchoring member coupling 36 in this case can comprise a pair of connector arms which extend from a point within the housing of the second portion 10, and connect at their distal ends to respective first 32a and second 32b portions of the anchoring member. These are pivotally connected to respective pivotable connection points within the second portion 10.

The arms 36 are spaced by a spacing, and the connecting element of the drive coupling 22 extends co-directionally with the connecting arms of the anchoring member coupling 36 through the spacing. It connects at its proximal end to the drive unit 24 and connects at its distal end to the body of the mouthpiece portion 12 to which the cleaning elements are mounted. Instead of spaced arms, equally, a tubular connecting element for the anchoring member coupling 36 could be provided.

Fig. 8 schematically shows a view of a bottom area of the mouthpiece portion, at an area facing the second portion 10, through which the couplings 22, 36 extend. In this example, there are three apertures which include one aperture 54 for accommodating passage of the drive coupling connecting element 22 into the body of the mouthpiece portion, for example embedded therein. The apertures further include a pair of apertures 52a, 52b either side of the first aperture 54 for accommodating passage of the respective anchoring member connecting arms 36 through the wall 18 of the mouthpiece portion 12 so as to connect to the anchoring member 32 inside the tooth receiving channel 16.

As illustrated schematically in Fig. 9, a width (W_a) across the aperture 52a in at least one direction is larger than a width of the connecting element arm/section 36 in the same direction, such that the aperture delimits a clearance area around the connecting element, permitting lateral movement of the connecting element within the aperture. By way of illustrative example, a width, W_a, of each of the apertures 52a, 52b may be sized to be equal to approximately 1-1.5 x the width of an average tooth plus the width of the coupling arm 36. For example, this may be 8 mm+2 mm, by way of illustration.

Although not shown in Fig. 9, the same aperture configuration may be provided for the other aperture 52b for the other connecting arm 36 of the coupling.

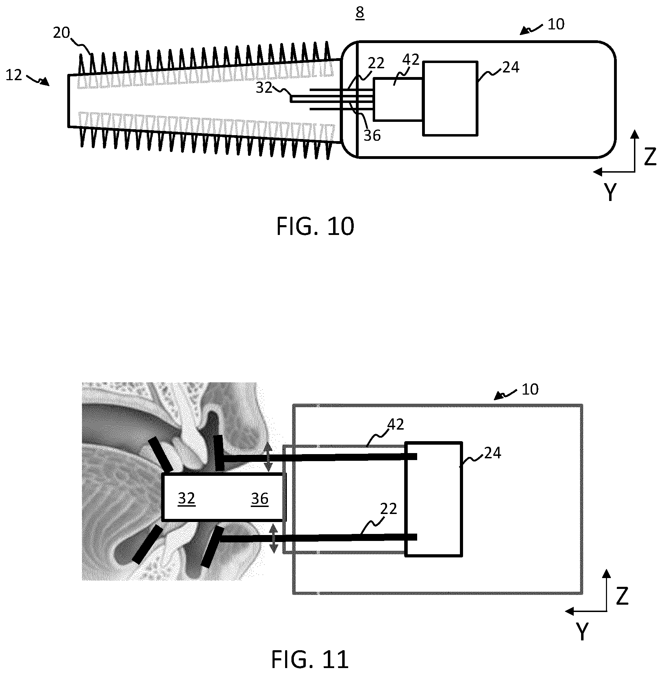

A further example implementation of the device according to a particular set of embodiments will now be described with reference to Figs. 10-11 by way of illustration of the previously-summarized concept of the invention. It will be appreciated that not all features of this particular set of embodiments are essential to the inventive concept, and are described to aid understanding and to provide an example to illustrate the inventive concepts. This set of embodiments can in all respects be the same as that of Figs. 3-5, and as that of Figs. 6-9, except in respect of the particular configuration of the couplings 22, 36, or connection elements thereof, which connect the drive unit 24 to the mouthpiece portion 12 and the second portion 10 to the anchoring member 32.

In this set of embodiments, the anchoring member 32 connects to the drive unit 24 in the second portion 10 via a thin flexible sheet 42 acting as a leaf spring. It is effectively rigid in the direction of actuation of the cleaning elements 20 (the up-down or Z direction in the illustrated example) but can be bent by the user in a direction transverse this actuation direction (in the x-y plane in this example) to move the mouthpiece portion 12 back and forth over the dentition during use. Connection element(s) of the drive coupling 22, connecting the drive unit 24 to the mouthpiece portion may be rigid (at least in the z direction), to thereby transfer the actuation drive motion efficiently.

Thus here, using the terminology consistent with that used throughout this disclosure, the connecting element of the anchoring member coupling 36 comprises at least a portion formed by a flexible sheet element 42, a plane of the flexible sheet element being oriented parallel with the direction of actuated motion of the cleaning elements (the z direction, or z-y plane in this example), and a normal of the plane of the sheet 42 being oriented parallel with said the direction 33 transverse to the direction of actuation (that is, the direction 33 in which the anchoring member is moveable relative to the mouthpiece portion 12).

The sheet element 42 in the illustrated example extends from the drive unit 24 to connect to a further connector element portion 36 of the anchoring member coupling which then extends to the anchoring member 32. The sheet element 42 could alternatively extend from another location in the second portion, e.g. a location between the drive unit 24 and the anchoring member.

The drive coupling 22 connects in this example from the drive unit to the mouthpiece portion 12. The drive coupling in this example comprises a pair of drive coupling connectors. Alternatively the drive coupling might be tubular in form and may be arranged co-axially with respect to the anchoring member coupling 36 so that the anchoring member coupling extends within an interior channel or bore delimited inside the drive coupling 22. The drive coupling 22 is not connected to the sheet element 42 so that it may move independently of the sheet element. The drive coupling performs the function of moving the mouthpiece portion (transferring the force from the drive unit 24 to the mouthpiece portion 12).

As a more general principle of this invention, it is a preferable feature of the coupling 36 between the second portion 10 and the anchoring member 32 that it should rigidly ground the motor in such a way that the brushing oscillation energy is optimally transferred to the mouthpiece. Assuming an up-down (z) oscillation, this can be done for example by making the connection rigid in the z direction. The connection should also be movable however in the x-y plane (using the same example co-ordinate axes), to allow the mouthpiece cleaning elements 20 to reach the full dentition, including the most posterior part of the mouth. As the teeth are close to parallel to the x-y plane, a coupling which is able to provide this movement flexibility in the x-y plane in combination with rigidity in the z-direction would be ideal. By providing the sheet element 42 so that it inhibits or impedes vibration in the direction of vibration (the z-direction in this example), so it may transfer the holding force of the user biting on the anchoring member 32 to the motor 24 and handle 10. In this way the drive unit 24 is held still and all the motion generated by the drive unit will go into moving the mouthpiece portion 12 (instead of vibrating also the drive unit body and handle 10).

Movement flexibility in the x-y plane can be achieved in a number of different ways, and some have already been discussed. Looking to Fig. 10 and 11, the motivation behind this set of embodiments is to provide a structurally simple arrangement. Here, the thin sheet 42 naturally provides flexibility in a direction normal to its planar surface, and relative rigidity in directions parallel to its planar surface.

The chosen materials for the sheet may, by way of illustration, include Nylon or polypropylene. The sheet 42 may have a thickness in the x direction of e.g. 0.2 to 1 mm (by way of illustration). The sheet 42 may have a dimension in the z-direction of for example 10-30 mm.

Relative rigidness in the z-direction could be achieved by for example choosing stiff material for the sheet and configuring the dimensions of the sheet in the z-direction.

With such an example arrangement, the user can bend the sheet 42 to allow the needed mesial to distal motion (and back) of the mouthpiece portion 12 relative to the anchoring member 32.

It is noted that the inventors have further realized that the simple sheet embodiment may not always be optimal, as the bending point cannot be well predicted. As a variant, it is proposed to provide a sheet with a specific thin area, to encourage bending to occur only there. In other words, the connecting element of the anchoring member coupling 36 may comprise a sheet element 42 having a reduced thickness section part way between the second portion 10 and the anchoring member 32, the reduced thickness section defining a preferential bending line of the sheet element, the preferential bending line being perpendicular to the direction in which bending is intended to occur, i.e. the bending line in this case is parallel with the z-direction. Preformed bends, e.g. (s-shapes), might alternatively be used to form the preferential bending line, to facilitate bending along a defined line.

Another alternative to using the sheet 42 would be to use a hinge connection.

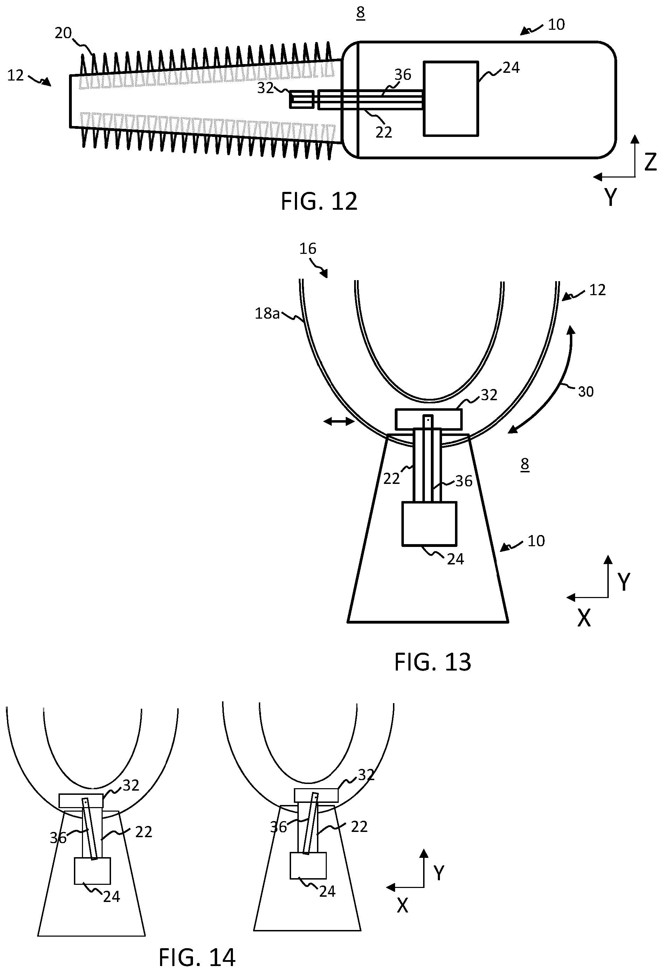

A further example implementation of the device according to a particular set of embodiments will now be described with reference to Figs. 12-14, by way of illustration of the previously-summarized concept of the invention. It will be appreciated that not all features of this particular set of embodiments are essential to the inventive concept, and are described to aid understanding and to provide an example to illustrate the inventive concepts. This set of embodiments can in all respects be the same as that of Figs. 3-5, and as that of Figs. 6-9, and as that of Figs. 10-11, except in respect of the particular configuration of the couplings 22, 36, or connection elements thereof, which connect the drive unit 24 to the mouthpiece portion 12 and the second portion 10 to the anchoring member 32.

In this set of embodiments, the connecting element of the anchoring member coupling 36 comprises a rod element. The connecting element is connected to the anchoring member via a pivotable joint, or is connected to the second portion or drive unit by a pivotable joint. In the illustrated example in Figs. 12-14, it is connected to the anchoring member by a pivotable joint, e.g. a hinge joint. This permits for example rotational motion along a single directional axis only.

In the particular example illustrated in Figs. 12-14. the connecting element 36 for the anchoring member 32 extends from a connection point interior of the anchoring member 32 itself. For example the anchoring member defines a hollow interior cavity for accommodating the connecting element. In the illustrated example, the connection point interior of the anchoring member defines a pivotable joint, e.g. a hinge joint.

This arrangement has some advantages as the rotation point interior of the anchoring member is very well defined, and there is no compromise needed on the stiffness on the materials: the stiffest materials can be chosen for stiff z-direction operation. Also, the x-y plane rotation movement at the pivot joint requires very little energy, as there is no spring force to overcome.

A potential disadvantage could be contamination with cleaning fluids of the hinge joint interior of the anchoring member 32. A solution might be to position the hinge inside the anchoring member, as suggested, and to seal off the interior cavity of the anchoring member using a sealing material or cap, such as a rubber seal.

The preferred position of the hinge joint may be at a location inside the mouth during use, as close as possible to the (half) circle symmetry point of the arcuate curve.

In the illustrated example, the drive coupling 22 extends co-directionally with the anchoring member coupling 36, for example in a co-axial relationship thereto. For example, the anchoring member coupling 36 may extend through a central bore or cavity of the drive coupling 22.

An accordance with any embodiment of this invention, in use, back and forth mesial-distal (x-y plane movement using the co-ordinate axes used throughout this disclosure), movement of the mouthpiece portion relative to the anchoring member held fast by the user may now be driven manually. Alternatively, if hands free operation is desired, the user may drive this motion using the tongue. For full reach, only one stroke to the distal right and one stroke to the distal left is needed, not requiring a lot of user energy.

If the coupling 36 is operating smoothly the tongue may indeed have sufficient force for driving this motion. Mechanisms may be included to reduce the force needed for sideways motion to enable tongue-driven operation. The biting of the anchoring member 32 itself could for example aid in driving the force. Additional actuators could be added which support the side-ways motion.

Further optional details relating to the anchoring member, and compatible with any embodiment of the invention, will now be briefly described.

As already discussed, in some embodiments, the anchoring member is for biting by the user. In such cases, it might be referred to as a bite block.

One or multiple bite block portions can be used. The bite block preferably has sufficient thickness in the z-direction to provide room for occlusal cleaning elements of the mouthpiece in the posterior regions. Preferably, it may comprise structural features to guide centering and placement of the position of the mouthpiece portion 12. It may have a surface with a high friction coefficient to avoid gliding movement when biting, such as for example a (hard) rubber finish.

In some embodiments, the device may include a sensing means configured such that biting of the anchoring member 32 by a user triggers activation of the actuation mechanism. This could include a pressure sensor in the bite block, or a high-sensitivity motion sensor arranged in the bite block or the handle portion 10 to sense motion of the coupling 36 between the bite block and the handle portion 10. Optimally, the triggering means could be configured so that the actuation mechanism starts only when the bite block is well-grounded between the teeth, i.e. sensed biting meets a biting condition. This could comprise a bite force sensor in the bite-block, starting the actuation, when force exceeds a threshold. This feature could give the user also a very intuitive control of the mouthpiece brushing power: when biting harder the power is increased.

Further optional details relating to the actuation mechanism, and compatible with any embodiment of the invention, will now be briefly described.

The drive unit may comprise one or more motors. The position of the motor(s) may be in the handle portion 10, where electronics and batteries may also be housed. It may alternatively be more close to the mouthpiece portion 12 or even arranged so that it is inside the mouth during use. As the preferred motion is a z-oscillation (using the co-ordinate system used in this disclosure), the motor and associated mechanical system should preferably generate an up-down oscillation at a sufficiently high frequency, e.g. 20 to 200Hz. There are many systems known in the art that can create such an oscillation.

With regards to the drive coupling 22, this connection preferably may be rigid at least in the brushing oscillation direction, to enable transfer of the drive motion to the cleaning elements. In some embodiments, there may further be provided one or more bending points or hinges in the drive coupling to accommodate the mesial-distal mouthpiece movement.

As regards the mouthpiece portion 12 itself, many alternative mouthpiece designs may be used. Also here, rigidity in the brushing oscillation direction is preferable to efficiently deliver the actuation motion to all mouthpiece cleaning elements 20, while keeping sufficient flexibility in the x-y plane to adapt to the different dentition curvatures of different people and to adapt to the change in curvature when moving from mesial to distal position.

As an optional additional feature, the device may include means for measuring a mesial-distal travel distance (that is, a travel distance of the mouthpiece portion relative to anchoring member in said first direction, for example relative to a pre-defined starting or neutral point). This enables provision of guidance to the user as to whether the full dental arch has been brushed. Measuring the travel distance could be achieved for example using a simple strain gauge in the anchoring member coupling 36, for example in the flexible sheet 42 in the embodiment of Figs. 10-11. A calibration could be performed at first use for example, wherein the user pushes the mouthpiece portion 12 fully backward to thereby measure the arch length which needs to be covered. Alternatively, the system could be configured to learn over a number of uses the length of the arch for an individual.

In some embodiments, one or more microprocessors could be included to control one or more components, e.g. the drive unit and/or any sensors.

It is noted that although embodiments illustrated in this disclosure have related to a C-shaped mouthpiece which extends fully around the dental arch of the user, instead the mouthpiece portion could extend around just a portion of the user's dental arch. Such mouthpiece designs are sometimes referred to as J-shaped mouthpieces.

By way of final summary, advantages of embodiments of this invention compared to the prior art include the combining of continuous bite grounding with the flexibility to move the mouthpiece portion side-ways in the mouth, in order thereby to facilitate reaching of the back molars with the mouthpiece portion, for instance in an undersized, non-custom mouthpiece. This offers two important benefits. A first is the provision of optimal motion transfer from the drive unit to the cleaning elements on the teeth for the full duration of use. A second is enabling optimal mindless ease of use: the user simply bites on the bite block (for example, activates the actuation mechanism, and manipulates the mouthpiece portion 12 to the back molars as far as possible.

An advantage over mouthpieces which offering no anchoring member is the optimal grounding of the motor motion to the teeth.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An oral care device (8) comprising:
a mouthpiece portion (12) for at least partial receipt in the mouth of a user,
wherein a body of the mouthpiece portion describes an arcuate contour (30), for approximately following at least a part of a contour of a user's dental arch, and
wherein the mouthpiece portion carries a set of oral cleaning elements (20) for mechanical engagement with teeth during operation;
a second portion (10), coupled to the mouthpiece portion;
an actuation mechanism (24) for actuating motion of the cleaning elements relative to said second portion, and relative to teeth when the mouthpiece portion is received in the mouth;
an anchoring member (32) engageable by a part of the user's mouth when the mouthpiece portion is received in the mouth for normal use, for holding the anchoring member fixed in position with respect to the jaws, wherein the anchoring member (32) is not attached to the mouthpiece portion (12) and wherein the anchoring member (32) is configured to move relative to the mouthpiece portion (12);
wherein the anchoring member (32) is mechanically coupled to said second portion (10) via an anchoring member coupling (36),
wherein the anchoring member coupling (36) is such as to permit relative motion between the anchoring member (32) and the mouthpiece portion (12) in at least a first direction (X), the first direction being transverse to a direction of motion (Z) of the cleaning elements (20), and
wherein the anchoring member coupling (36) is such as to at least partially prevent relative motion between the anchoring member (32) and the mouthpiece portion (12) in a second direction (Z), the second direction being substantially parallel with said direction of motion of the cleaning elements.

2. The device of claim 1, wherein the second portion (10) is for remaining outside of the mouth during use, when the mouthpiece portion (12) is received inside the mouth.

3. The device of claim 1 or 2, wherein the anchoring member coupling (36) is rigid in said second direction (Z), and flexible or pivotable in said first direction (X).

4. The device of any of claims 1-3, wherein the arcuate contour (30) defined by the body of the mouthpiece portion (12) lay in a plane, and wherein said first direction (X) is parallel with said plane.

5. The device of any of claims 1-4, wherein the anchoring member (32) is for biting by the user.

6. The device of any of claims 1-5, wherein the said first direction (X) is oriented such that, when the mouthpiece portion (12) is received in the mouth for normal use, it is approximately perpendicular to a vertical axis extending between the upper and lower jaws.

7. The device of any of claims 1-6, wherein the second portion (10) is a handle portion of the oral care device, wherein the handle portion houses a drive unit (24) of the actuation mechanism for generating a driving force of the motion.

8. The device of any of claims 1-7, wherein the anchoring member coupling (36) comprises a connecting element extending from the anchoring member (32) to the drive unit (24), or extending from the anchoring member (32) to a location in or on a housing of the second portion (10).

9. The device of any of claims 1-8, wherein said connecting element comprises at least a portion formed by a flexible sheet element (42), a plane of the flexible sheet element being oriented parallel with said second direction, and a normal of the plane being oriented parallel with said first direction (X).

10. The device of any of claims 1-9, wherein the connecting element comprises a sheet element having a reduced thickness section, the reduced thickness section defining a preferential bending line of the sheet element, the preferential bending line being perpendicular to said first direction.

11. The device of any of claims 1-10, wherein the connecting element comprises an inflexible element, and wherein the connecting element is connected to the anchoring member (32) via a pivotable joint, or is connected to the second portion or drive unit by a pivotable joint.

12. The device of any of claims 1-11, wherein the connecting element extends from a connection point interior of the anchoring member, and preferably wherein the anchoring member includes a hollow interior cavity for accommodating the connecting element.

13. The device of claim 12, wherein said connection point interior of the anchoring member defines a pivotable joint.

14. The device of any of claims 1-13, wherein the drive unit is a motor.

## Patentansprüche

1. Mundpflegevorrichtung (8) umfassend:
einen Mundstückabschnitt (12) zur zumindest teilweisen Aufnahme in den Mund eines Benutzers,
wobei ein Körper des Mundstückabschnitts eine bogenförmige Kontur (30) beschreibt, die annähernd mindestens einem Teil einer Kontur des Zahnbogens eines Benutzers folgt, und
wobei der Mundstückabschnitt eine Reihe von Mundreinigungselementen (20) zum mechanischen Eingreifen mit Zähnen während des Betriebs trägt;
einen zweiten Abschnitt (10), der mit dem Mundstückabschnitt gekoppelt ist;
einen Betätigungsmechanismus (24) zur Betätigung von Bewegung der Reinigungselemente in Bezug auf den zweiten Abschnitt und in Bezug auf Zähne, wenn der Mundstückabschnitt im Mund aufgenommen ist;
ein Verankerungselement (32), das von einem Teil des Mundes eines Benutzers erfasst werden kann, wenn der Mundstückabschnitt zur normalen Verwendung im Mund aufgenommen ist, um das Verankerungselement in Bezug auf die Kiefer in Position zu halten, wobei das Verankerungselement (32) nicht am Mundstückabschnitt (12) befestigt ist, und wobei das Verankerungselement (32) so konfiguriert ist, dass es sich in Bezug auf den Mundstückabschnitt (12) bewegt;
wobei das Verankerungselement (32) über eine Verankerungselementkupplung (36) mechanisch mit dem zweiten Abschnitt (10) gekoppelt ist,
wobei die Verankerungselementkopplung (36) derart ist, dass Relativbewegung zwischen dem Verankerungselement (32) und dem Mundstückabschnitt (12) in mindestens einer ersten Richtung (X) ermöglicht wird, wobei die erste Richtung quer zu einer Bewegungsrichtung (Z) der Reinigungselemente (20) verläuft, und
wobei die Verankerungselementkupplung (36) derart ist, dass Relativbewegung zwischen dem Verankerungselement (32) und dem Mundstückabschnitt (12) in einer zweiten Richtung (Z) zumindest teilweise verhindert wird, wobei die zweite Richtung im Wesentlichen parallel zur Bewegungsrichtung der Reinigungselemente verläuft.

2. Vorrichtung nach Anspruch 1, wobei der zweite Abschnitt (10) dazu dient, während des Gebrauchs außerhalb des Mundes zu bleiben, wenn der Mundstückabschnitt (12) im Mund aufgenommen ist.

3. Vorrichtung nach Anspruch 1 oder 2, wobei die Verankerungselementkupplung (36) in der zweiten Richtung (Z) starr und in der ersten Richtung (X) flexibel oder schwenkbar ist.

4. Vorrichtung nach einem der Ansprüche 1-3, wobei die durch den Körper des Mundstückabschnitts (12) definierte bogenförmige Kontur (30) in einer Ebene liegt und wobei die erste Richtung (X) parallel zu dieser Ebene verläuft.

5. Vorrichtung nach einem der Ansprüche 1-4, wobei das Verankerungselement (32) zum Beißen durch den Benutzer dient.

6. Vorrichtung nach einem der Ansprüche 1-5, wobei die erste Richtung (X) so ausgerichtet ist, dass, wenn der Mundstückabschnitt (12) für normalen Gebrauch im Mund aufgenommen ist, sie annähernd senkrecht zu einer vertikalen Achse ist, die sich zwischen Ober- und Unterkiefer erstreckt.

7. Vorrichtung nach einem der Ansprüche 1-6, wobei der zweite Abschnitt (10) ein Griffabschnitt der Mundpflegevorrichtung ist, wobei der Griffabschnitt eine Antriebseinheit (24) des Betätigungsmechanismus zur Erzeugung einer Antriebskraft für die Bewegung beherbergt.

8. Vorrichtung nach einem der Ansprüche 1-7, wobei die Verankerungselementkupplung (36) ein Verbindungselement umfasst, das sich vom Verankerungselement (32) zur Antriebseinheit (24) oder vom Verankerungselement (32) zu einer Stelle in oder an einem Gehäuse des zweiten Abschnitts (10) erstreckt.

9. Vorrichtung nach einem der Ansprüche 1-8, wobei das Verbindungselement mindestens einen Abschnitt umfasst, der aus einem flexiblen Flächenelement (42) gebildet ist, wobei eine Ebene des flexiblen Flächenelements parallel zur zweiten Richtung ausgerichtet ist und eine Normale der Ebene parallel zu der ersten Richtung (X) ausgerichtet ist.

10. Vorrichtung nach einem der Ansprüche 1-9, wobei das Verbindungselement ein Flächenelement umfasst, das einen Abschnitt reduzierter Dicke aufweist, wobei der Abschnitt reduzierter Dicke eine bevorzugte Biegelinie des Flächenelements definiert, wobei die bevorzugte Biegelinie senkrecht zu der ersten Richtung verläuft.

11. Vorrichtung nach einem der Ansprüche 1-10, wobei das Verbindungselement ein unflexibles Element umfasst und wobei das Verbindungselement über ein schwenkbares Gelenk mit dem Verankerungselement (32) oder über ein schwenkbares Gelenk mit dem zweiten Abschnitt oder der Antriebseinheit verbunden ist.

12. Vorrichtung nach einem der Ansprüche 1-11, wobei sich das Verbindungselement von einem Verbindungspunkt im Inneren des Verankerungselements erstreckt, und vorzugsweise wobei das Verankerungselement einen hohlen Innenraum zum Beherbergen des Verbindungselements einschließt.

13. Vorrichtung nach Anspruch 12, wobei der Verbindungspunkt im Inneren des Verankerungselements ein schwenkbares Gelenk definiert.

14. Vorrichtung nach einem der Ansprüche 1-13, wobei die Antriebseinheit ein Motor ist.

## Revendications

1. Dispositif de soins bucco-dentaires (8) comprenant :
une partie embout buccal (12) destinée à être reçue au moins partiellement dans la bouche d'un utilisateur,
dans lequel le corps de la partie embout buccal décrit un contour arqué (30), pour suivre approximativement au moins une partie du contour de l'arcade dentaire de l'utilisateur, et
dans lequel la partie embout buccal comporte un ensemble d'éléments de nettoyage buccal (20) destiné à établir un contact mécanique avec les dents pendant le fonctionnement ;
une seconde partie (10), couplée à la partie embout buccal ;
un mécanisme d'actionnement (24) pour actionner le mouvement des éléments de nettoyage par rapport à ladite seconde partie, et par rapport aux dents lorsque la partie embout buccal est reçue dans la bouche ;
un élément d'ancrage (32) pouvant être engagé par une partie de la bouche de l'utilisateur lorsque la partie embout buccal est reçue dans la bouche pour une utilisation normale, afin de maintenir l'élément d'ancrage fixe en position par rapport aux mâchoires, dans lequel l'élément d'ancrage (32) n'est pas attaché à la partie embout buccal (12) et dans lequel l'élément d'ancrage (32) est configuré pour se déplacer par rapport à la partie embout buccal (12) ;
dans lequel l'élément d'ancrage (32) est couplé mécaniquement à ladite seconde partie (10) via un couplage d'élément d'ancrage (36),
dans lequel le couplage d'élément d'ancrage (36) est tel qu'il permet un mouvement relatif entre l'élément d'ancrage (32) et la partie embout buccal (12) dans au moins une première direction (X), la première direction étant transversale à une direction de mouvement (Z) des éléments de nettoyage (20), et
dans lequel le couplage d'élément d'ancrage (36) est tel qu'il empêche au moins partiellement un mouvement relatif entre l'élément d'ancrage (32) et la partie embout buccal (12) dans une deuxième direction (Z), la deuxième direction étant sensiblement parallèle à ladite direction de mouvement des éléments de nettoyage.

2. Dispositif selon la revendication 1, dans lequel la seconde partie (10) est destinée à rester à l'extérieur de la bouche pendant l'utilisation, lorsque la partie embout buccal (12) est reçue à l'intérieur de la bouche.

3. Dispositif selon la revendication 1 ou 2, dans lequel le couplage d'élément d'ancrage (36) est rigide dans ladite deuxième direction (Z) et flexible ou pivotant dans ladite première direction (X).

4. Dispositif selon l'une quelconque des revendications 1-3, dans lequel le contour arqué (30) défini par le corps de la partie embout buccal (12) s'étend dans un plan, et dans lequel ladite première direction (X) est parallèle audit plan.

5. Dispositif selon l'une quelconque des revendications 1-4, dans lequel l'élément d'ancrage (32) est destiné à être mordu par l'utilisateur.

6. Dispositif selon l'une quelconque des revendications 1-5, dans lequel ladite première direction (X) est orientée de telle sorte que lorsque la partie embout buccal (12) est reçue dans la bouche pour une utilisation normale, elle est approximativement perpendiculaire à un axe vertical s'étendant entre les mâchoires supérieure et inférieure.

7. Dispositif selon l'une quelconque des revendications 1-6, dans lequel la seconde partie (10) est une partie poignée du dispositif de soins bucco-dentaires, dans lequel la partie poignée abrite une unité d'entraînement (24) du mécanisme d'actionnement pour générer une force d'entraînement du mouvement.

8. Dispositif selon l'une quelconque des revendications 1-7, dans lequel le couplage d'élément d'ancrage (36) comprend un élément de liaison s'étendant de l'élément d'ancrage (32) à l'unité d'entraînement (24), ou s'étendant de l'élément d'ancrage (32) à un emplacement dans ou sur un boîtier de la seconde partie (10).

9. Dispositif selon l'une quelconque des revendications 1-8, dans lequel ledit élément de liaison comprend au moins une partie formée par un élément en feuille flexible (42), un plan de l'élément en feuille flexible étant orienté parallèlement à ladite deuxième direction, et une perpendiculaire du plan étant orientée parallèlement à ladite première direction (X).

10. Dispositif selon l'une quelconque des revendications 1-9, dans lequel l'élément de liaison comprend un élément en feuille présentant une section d'épaisseur réduite, la section d'épaisseur réduite définissant une ligne de flexion préférentielle de l'élément en feuille, la ligne de flexion préférentielle étant perpendiculaire à ladite première direction.

11. Dispositif selon l'une quelconque des revendications 1-10, dans lequel l'élément de liaison comprend un élément inflexible, et dans lequel l'élément de liaison est relié à l'élément d'ancrage (32) par une articulation pivotante, ou est relié à la seconde partie ou à l'unité d'entraînement par une articulation pivotante.

12. Dispositif selon l'une quelconque des revendications 1-11, dans lequel l'élément de liaison s'étend à partir d'un point de liaison à l'intérieur de l'élément d'ancrage, et de préférence dans lequel l'élément d'ancrage inclut une cavité intérieure creuse destinée à accueillir l'élément de liaison.

13. Dispositif selon la revendication 12, dans lequel ledit point de liaison à l'intérieur de l'élément d'ancrage définit une articulation pivotante.

14. Dispositif selon l'une quelconque des revendications 1-13, dans lequel l'unité d'entraînement est un moteur.
